# EUROPÄISCHE PATENTSCHRIFT

(11) **EP 0 804 983 B1**
(45) Veröffentlichungstag und Bekanntmachung des Hinweises auf die Patenterteilung: **19.12.2001**
(21) Anmeldenummer: 97106761.6
(22) Anmeldetag: 24.04.1997
(51) Int. Cl.: B23B 25/06, B23C 9/00, B23Q 1/26

(54) **Werkzeug mit Sensor**
Tool with sensor
Outil avec capteur

(30) Priorität: 04.05.1996 DE 19617887
(43) Veröffentlichungstag der Anmeldung: 05.11.1997
(73) Patentinhaber: Joh. & Ernst Link GmbH & Co. KG, D-70565 Stuttgart (DE)
(72) Erfinder: Link, Hans-Jörg, 70563 Stuttgart (DE); Höfflinger, Bernd, Prof.Dr., 71063 Sindelfingen (DE)
(74) Vertreter: Kohl, Karl-Heinz

(56) Entgegenhaltungen:
- EP-A- 0 117 354
- US-A- 4 449 085

## Beschreibung

Die Erfindung betrifft eine Bearbeitungseinrichtung mit einer Werkzeugaufnahme und einem Werkzeug nach dem Oberbegriff des Anspruches 1 bzw. 4 (siche US-A-4 449 085).

Bei der Bearbeitung von Werkstücken ist es in der Regel erforderlich, daß die Bearbeitungsgenauigkeit bestimmten Anforderungen entspricht. So muß beispielsweise eine Bohrung kreisförmigen Querschnitt haben und darf keinen unrunden Querschnitt aufweisen. Um die Bearbeitungsqualität zu überprüfen, werden die Werkstücke nach der Bearbeitung entweder manuell oder in Prüfstationen auf die geforderte Bearbeitungsqualität hin überprüft. Stellt sich ein Bearbeitungsfehler heraus, muß das Werkstück entweder erneut bearbeitet werden, oder es ist Ausschuß. Eine Nachbearbeitung des Werkstükkes erfordert zusätzliche Bearbeitungszeit.

Es ist eine Bearbeitungseinrichtung bekannt (US-A-4 449 085), bei der im Arbeitsraum einer Bearbeitungsmaschine ein optisches Element und ein nachgeschalteter thermischer Sensor angeordnet sind, mit denen die Prozeßtemperatur während der Bearbeitung überwacht wird. Dadurch soll ein Verschleiß des Werkzeuges festgestellt werden.

Der Erfindung liegt die Aufgabe zugrunde, die gattungsgemäße Bearbeitungseinrichtung so auszubilden, daß die geforderten Bearbeitungsqualitäten einfach und dennoch zuverlässig eingehalten werden können.

Diese Aufgabe wird bei der gattungsgemäßen Bearbeitungseinrichtung erfindungsgemäß mit den kennzeichnenden Merkmalen des Anspruches 1 bzw. 4 gelöst.

Das erfindungsgemäße Werkzeug gemäß den Ansprüchen 1 und 4 stellt ein intelligentes Werkzeug dar, da bereits während oder unmittelbar nach der Bearbeitung mit dem Sensor überprüft werden kann, ob das Arbeitsergebnis den geforderten Anforderungen entspricht. Der Sensor ist Bestandteil des Werkzeuges und an der Außenseite des Werkzeuges (Anspruch 1) oder im Werkzeug (Anspruch 4) vorgesehen. Der Sensor überwacht zumindest einen Teil des Bearbeitungsbereiches des Werkzeuges am Werkstück, so daß während der Bearbeitung oder unmittelbar nach der Bearbeitung eine Kontrolle hinsichtlich des Arbeitsergebnisses möglich ist. Treten Fehler bei der Bearbeitung des Werkstückes auf, kann die Auswerteeinheit, an welche die Signale zur Auswertung übersandt werden, entsprechend reagieren, beispielsweise ein Signal abgeben, so daß bereits während oder unmittelbar nach der Bearbeitung des Werkstückes Korrekturmaßnahmen ergriffen werden können.

Das erfindungsgemäße Werkzeug stellt ein intelligentes Werkzeug dar, da bereits während oder unmittelbar nach der Bearbeitung mit dem Sensor überprüft werden kann, ob das Arbeitsergebnis den geforderten Anforderungen entspricht. Der Sensor überwacht zumindest einen Teil des Bearbeitungsbereiches des Werkzeuges am Werkstück, so daß während der Bearbeitung oder unmittelbar nach der Bearbeitung eine Kontrolle hinsichtlich des Arbeitsergebnisses möglich ist. Treten Fehler bei der Bearbeitung des Werkstückes auf, kann die Auswerteeinheit, an welche die Signale zur Auswertung übersandt werden, entsprechend reagieren, beispielsweise ein Signal abgeben, so daß bereits während oder unmittelbar nach der Bearbeitung des Werkstückes Korrekturmaßnahmen ergriffen werden können.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen:
- Fig. 1: in schematischer Darstellung und teilweise im Schnitt eine erste Ausführungsform eines erfindungsgemäßen Werkzeuges,
- Fig. 2 bis 3 sowie 5: in Darstellungen entsprechend Fig. 1 weitere Ausführungsformen von erfindungsgemäßen Werkzeugen,
- Fig 4: eine Ausführungsform, die nicht von den unabhängigen Ansprüchen 1 und 4 umfaßt ist.
- Fig. 5a: in einer Darstellung entsprechend Fig. 1 eine weitere Ausführungsform eines erfindungsgemäßen Werkzeuges,
- Fig. 6: in schematischer Darstellung die Signalverarbeitung beim erfindungsgemäßen Werkzeug,
- Fig. 7: eine elektronische Schaltung für den Einsatz des erfindungsgemäßen Werkzeuges.

Bei den im folgenden beschriebenen Werkzeugen wird das Bearbeitungsergebnis ständig gemessen und aufgrund der Messung das Werkzeug und/oder das zu bearbeitende Werkstück on line bis zum Sollergebnis nachgeführt. Zwischen den Bearbeitungs- und Meßzyklen am Werkstück ist kein Verfahren des Werkzeuges und/oder des Werkstückes und ein Wechseln notwendig. Vielmehr wird das Arbeitsergebnis, beispielsweise die Rundheit einer Bohrung, unmittelbar während der Bearbeitung gemessen und ausgewertet, so daß Bearbeitungsfehler sofort erkannt und korrigiert werden können. Das fertig bearbeitete Werkstück bedarf darum keiner weiteren Überprüfung mehr. Da eine eventuelle Korrektur während der Bearbeitung durchgeführt werden kann, ergeben sich äußerst kurze Bearbeitungszeiten und insbesondere hohe Ergebnisqualtitäten. Darüberhinaus wird auch eine sehr hohe Werkzeuglebensdauer erreicht, da infolge der online-Messung und -auswertung während der Bearbeitung das entsprechende Werkzeug optimal lange zur Bearbeitung verwendet werden kann.

Es ist auch möglich, mit dem Werkzeug die Bearbeitung am Werkstück durchzuführen und unmittelbar anschließend das Bearbeitungsergebnis zu messen und auszuwerten. Entspricht das Bearbeitungsergebnis nicht den gewünschten Anforderungen, wird unmittelbar anschließend das Werkzeug und/oder das Werkstück im erforderlichen Maße korrigiert und eine Nachbearbeitung durchgeführt. Während bei der zuvor beschriebenen Ausführung die Messung, die Auswertung und die eventuelle Korrektur während der Bearbeitung erfolgen, wird im anderen Fall das Werkstück zunächst bearbeitet, anschließend die Messung und die Auswertung durchgeführt und dann gegebenenfalls eine Nachbearbeitung vorgenommen. Im folgenden wird die Messung während der Bearbeitung des Werkstückes näher beschrieben. Die Messung und Auswertung nach der Bearbeitung wird in entsprechender Weise zeitlich versetzt zur Bearbeitung durchgeführt.

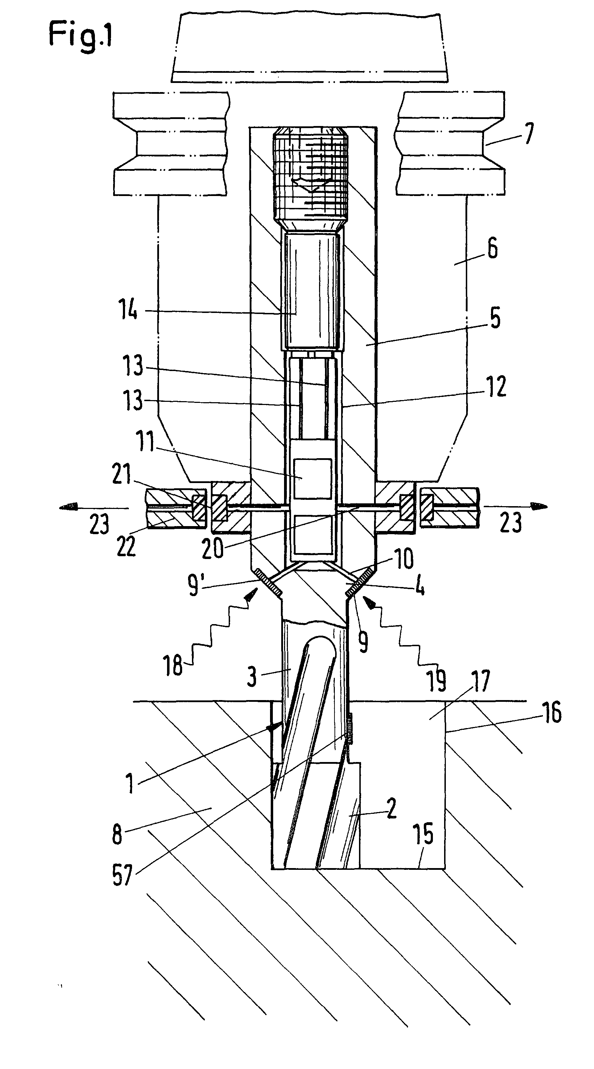

Beim Ausführungsbeispiel nach Fig. 1 ist als Werkzeug 1 ein Zirkularfräser vorgesehen. Er hat einen Fräserteil 2, der in bekannter Weise ausgebildet ist. Der Fräserteil 2 ist am freien Ende eines Halses 3 vorgesehen, dessen Durchmesser kleiner ist als der Arbeitsdurchmesser des Fräserteiles 2. Mit Abstand vom Fräserteil 2 geht der Hals 3 über einen Konusteil 4 in einen Einspannschaft 5 über. Mit ihm ist das Werkzeug 1 in einer Werkzeugaufnahme 6 in bekannter Weise gehalten. Die Werkzeugaufnahme 6 ist in Fig. 1 mit strichpunktierten Linien angedeutet und hat eine Greifernut 7, in die ein Greifer eines Handhabungsgerätes, wie beispielsweise eines Werkzeugwechslers, in bekannter Weise eingreifen kann. Die Werkzeugaufnahme 6 wird in eine Spindeleinheit einer Bearbeitungsmaschine eingesetzt und in bekannter Weise drehbar angetrieben.

Der Konusteil 4 des Werkzeuges 1 verjüngt sich in Richtung auf den Hals 3. Wie Fig. 1 zeigt, liegt der Konusteil 4 mit axialem Abstand sowohl zur Werkzeugaufnahme 6 als auch zu einem Werkstück 8, das mit dem Werkzeug 1 bearbeitet wird.

Am Konusteil 4 ist wenigstens ein Fotosensor 9 vorgesehen, der vorzugsweise ein Fotosensor-Array ist. Mit ihm kann der Bearbeitungsbereich des Werkzeuges 1 in noch zu beschreibender Weise überwacht werden. Da das Werkzeug 1 beim Zirkularfräsen mit hoher Drehzahl angetrieben wird, reicht grundsätzlich ein Fotosensor 9 aus. Zur Erhöhung der Meßgenauigkeit kann es vorteilhaft sein, wenigstens zwei Fotosensoren 9 am Konusteil 4 des Werkzeuges 1 vorzusehen. Im dargestellten Ausführungsbeispiel sind zwei Fotosensoren 9, 9' vorgesehen, die jedoch unterschiedliche Bereiche am Werkstück 8 während dessen Bearbeitung überwachen. Jeder Fotosensor 9, 9' ist über Leitungen 10 mit einem elektronischen Verarbeitungsmodul 11 verbunden, das in einer axialen Aufnahme 12 des Einspannschaftes 5 untergebracht ist. Das Verarbeitungsmodul 11 ist über Leitungen 13 an eine Energieversorgung 14 angeschlossen, die ebenfalls im Einspannschaft 5 angeordnet ist und beispielsweise ein Akku oder eine Batterie sein kann. Auch eine externe Energieversorgung ist selbstverständlich möglich.

Durch die Aufnahme 12 kann Kühlmittel während der Bearbeitung des Werkstückes 8 in bekannter Weise hindurchgeführt werden. Das Verarbeitungsmodul 11, die Leitungen 13 und die Energieversorgung 14 sind aus diesem Grunde in eine Kapselung eingebettet.

Die Fotosensoren 9, 9' sind am Konusteil 4 so angeordnet, daß sie bearbeitete Flächen 15 und 16 des Werkstükkes 8 sowie dessen Oberseite im Bearbeitungsbereich erfassen können. Die Fläche 15 ist im dargestellten Ausführungsbeispiel der Boden einer Sacklochbohrung 17, während die Fläche 16 die Seitenwand der Sacklochbohrung 17 bildet. Der Fräserteil 2 hat dementsprechend (nicht dargestellte) Stirnschneiden zur Bearbeitung des Bodens 15 und Umfangsschneiden zur Bearbeitung der Seitenwand der Sacklochbohrung 17. Die Fotosensoren 9, 9' erfassen die bearbeiteten Flächen 15, 16 und die Werkstückoberseite den Bohrungsrand, was in Fig. 1 durch entsprechende Pfeile 18, 19 angedeutet ist. Die empfangenen Signale 18, 19 werden über die Leitungen 10 dem Verarbeitungsmodul 11 zugeführt. Es ist über Leitungen 20 mit einem auf dem Einspannschaft 5 sitzenden Übertragungsring 21 verbunden, der mit geringem Abstand von einem weiteren Übertragungsring 22 umgeben ist. Die beiden Ringe 21, 22 bilden Kontakte bzw. Sender/Empfänger für eine elektronische Signalübertragung. Die von den Fotosensoren 9, 9' kommenden Signale werden über diese Schnittstelle nach außen zu einem (nicht dargestellten) Rechner übertragen, was in Fig. 1 durch Pfeile 23 angedeutet ist.

Bei der Bearbeitung des Werkstückes 8 dreht das Werkzeug 1 um seine Achse und wird außerdem um die Achse der Sacklochbohrung 17 umlaufend bewegt. Während der Bearbeitung werden mit den Fotosensoren 9, 9' der Boden 15 sowie die Seitenwand 16 der Sacklochbohrung und die Werkstückoberseite im Bearbeitungsbereich bereits während des Fräsvorganges erfaßt. Die Fotosensoren 9, 9' übertragen entsprechende Signale an den Rechner. Er bewertet die Signale on line und vergleicht die Ist-Signale mit im Rechner gespeicherten Soll-Signalen. Wird beispielsweise die Sacklochbohrung 17 nicht exakt rund gebohrt, wird dies augenblicklich bei der Auswertung im Rechner festgestellt. Er gibt dann ein entsprechendes Regelsignal an die Bearbeitungseinheit, die entsprechend so korrigiert, daß die Sacklochbohrung 17 exakt rund gebohrt wird. Auf gleiche Weise können auch andere Kriterien bei der Herstellung der Sacklochbohrung 17 überwacht und korrigiert werden, so z.B. auch die Zylindrizität der Seitenwand 16. Sollte die Seitenwand 16 beispielsweise eine unerwünschte konische Ausbildung haben, kann der Rechner anhand der von den Fotosensoren 9 übertragenen Signale diesen Fehler feststellen und entsprechende Regel- bzw. Korrektursignale an die Bearbeitungseinheit senden.

Aufgrund dieses sehenden Werkzeuges ist es möglich, bereits während der Bearbeitung Fehler festzustellen und augenblicklich zu korrigieren. Dadurch ist die Gewähr dafür gegeben, daß das bearbeitete Werkstück 8 die erforderliche Bearbeitungsqualität hat, so daß eine nachfolgende Prüfung bzw. Qualitätskontrolle von Hand oder in einer gesonderten Prüfstation und/oder mit einem gesonderten Werkzeug entfallen kann.

Die Fotosensoren 9, 9' können Zeilen- oder Flächen-Fotosensor-Arrays sein. Die Signalübertragung über die Übertragungsringe 21, 22 erfolgt kontaktlos, so daß Störungen während der Werkstückbearbeitung nicht zu befürchten sind, zumal die Übertragungsringe 21, 22 in einem ausreichenden Abstand vom Bearbeitungsbereich des Werkzeuges 1 vorgesehen sind. Der Übertragungsring 22 ist ortsfest, während der innere Übertragungsring 21 drehfest mit dem Werkzeug verbunden ist.

Zur Unterstützung der direkten Vermessung der Bohrungsgeometrie mittels der optischen Sensoren 9, 9' können Dehnmeßstreifen 57 mit entsprechender Verschaltung am Werkzeug 1 an geeigneten Stellen angebracht werden. Die Signalverstärkung und -auswertung sowie die Energieversorgung kann sich ebenfalls auf dem rotierenden Werkzeug 1 befinden. Mittels der Dehnmeßstreifen 57 können Rückschlüsse auf die Verformung des Werkzeuges 1 und damit auf die Geometrie der erzeugten Bohrung gemacht werden.

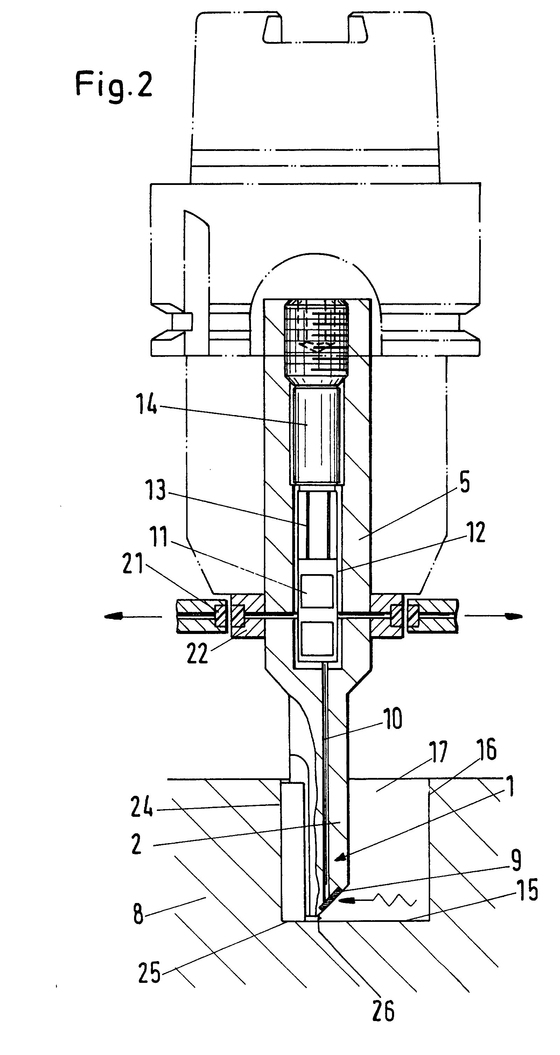

Beim Ausführungsbeispiel nach Fig. 2 ist nur ein Fotosensor 9 nahe der Stirnseite des Fräserteiles 2 des Werkzeuges 1 angeordnet. Der Fräserteil 2 hat Umfangsschneiden 24 und Stirnschneiden 25, mit denen die Seitenwand 16 und der Boden 15 der Sacklochbohrung 17 hergestellt werden.

Der Fotosensor 9 ist an einer Schrägfläche 26 am freien Ende des Fräserteiles 2 befestigt. Die Leitungen 10 verlaufen axial durch den Fräserteil 2 bis zum Verarbeitungsmodul 11, das wie beim vorigen Ausführungsbeispiel in der Aufnahme 12 des Einspannschaftes 5 untergebracht ist.

Da der Fotosensor 9 schräg zur Achse des Fräserteiles 2 angeordnet ist, kann mit ihm gleichzeitig der Boden 15 und die Seitenwand 16 der Sacklochbohrung 17 erfaßt werden. Das Ausführungsbeispiel entspricht im übrigen der Ausführungsform nach Fig. 1. Die vom Fotosensor 9 kommenden Signale werden kontaktlos über die Übertragungsringe 21, 22 an den Rechner übertragen, der die Signale in der beschriebenen Weise auswertet und gegebenenfalls eine Korrekturbewegung des Werkzeuges 1 veranlaßt.

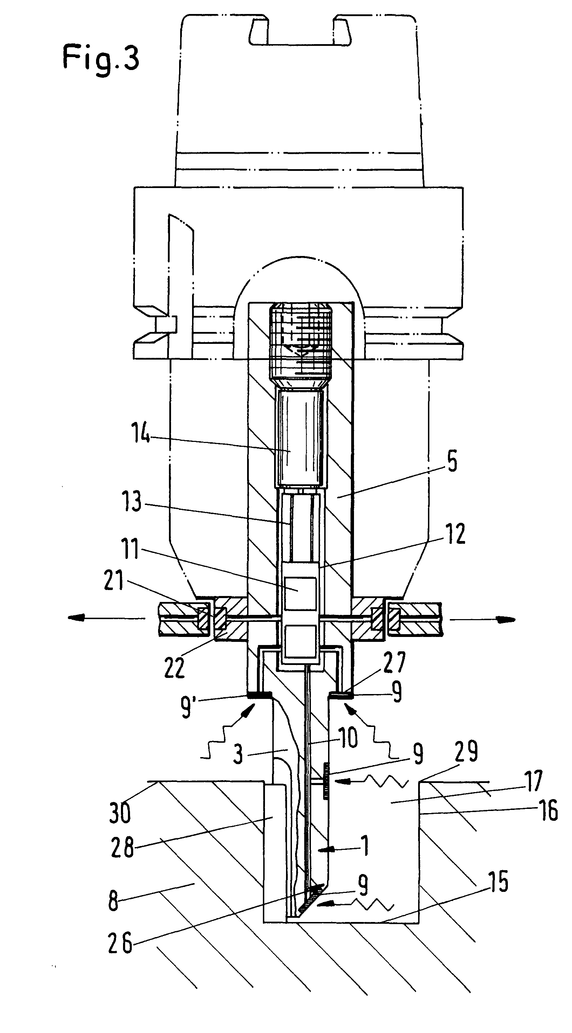

Fig. 3 zeigt ein Ausführungsbeispiel, bei dem mit zwei Fotosensoren 9, 9' unterschiedliche Bereiche des zu bearbeitenden Werkstückes 8 während der Bearbeitung erfaßt werden. Das Werkzeug 1 ist ähnlich ausgebildet wie das Werkzeug gemäß Fig. 2. Lediglich am Übergang vom Hals 3 in den Einspannschaft 5 ist kein Konusteil vorgesehen. Statt dessen ist eine Ringschulter 27 vorhanden, die in einer Radialebene der Werkzeuges 1 liegt und rechtwinklig zur gemeinsamen Achse von Hals und Einspannschaft 5 verläuft. Auf der Ringschulterfläche 27 sind die beiden Fotosensoren 9, 9' angeordnet. Der Fräserteil 2 des Werkzeuges 1 hat am freien Ende die Schrägfläche 26, auf der ebenfalls ein Fotosensor 9 angeordnet ist. Außerdem ist wenigstens ein weiterer Sensor 9 im Bereich zwischen dem freien Ende des Fräserteiles 2 und der Ringschulter 27 vorgesehen. Er ist in Höhe des dem Hals 3 zugewandten Endes der Schneiden 28 des Fräserteiles 2 in dessen Mantelfläche vorgesehen.

Wie beim Ausführungsbeispiel nach Fig. 2 kann mit dem Fotosensor 9 am freien Ende des Fräserteiles 2 der Boden 15 sowie zumindest der untere Teil der Seitenwand 16 der Sacklochbohrung 17 überwacht werden. Mit dem mittleren Sensor 9 kann im Ausführungsbeispiel die Bohrungskante 29 der Sacklochbohrung 17 erfaßt werden. Mit den an der Ringschulter 27 vorgesehenen Fotosensoren 9, 9' kann ebenfalls der Bohrungsrand 29 sowie die Seitenwand 16 der Sacklochbohrung sowie die Oberseite 30 des Werkstükkes 8 im Bereich der Sacklochbohrung 17 erfaßt werden. Mit diesem Werkzeug ist somit während der Bearbeitung eine vollständige Überwachung sämtlicher kritischer Stellen beim Herstellen der Sacklochbohrung 17 möglich. Die Fotosensoren sind an das Verarbeitungsmodul 11 angeschlossen, das entsprechend den vorigen Ausführungsformen in der zentralen Aufnahme 12 des Einspannschaftes 5 untergebracht ist. Die Übertragung der von den Fotosensoren 9, 9' kommenden Signale an den Rechner erfolgt wiederum berührungslos über die Übertragungsringe 21, 22. Das Verarbeitungsmodul 11 ist so ausgebildet, daß die von den verschiedenen Fotosensoren 9, 9' kommenden Signale auch den entsprechenden Sensoren zugeordnet werden können. Im Rechner werden diese Signale ausgewertet, so daß schon während der Bearbeitung des Werkstückes 8 eventuelle Fehler beim Fräsen der Sacklochbohrung 17 festgestellt werden können. Je nachdem, wo der Bearbeitungsfehler auftritt, wird, gesteuert vom Rechner, das Bearbeitungswerkzeug entsprechend korrigiert.

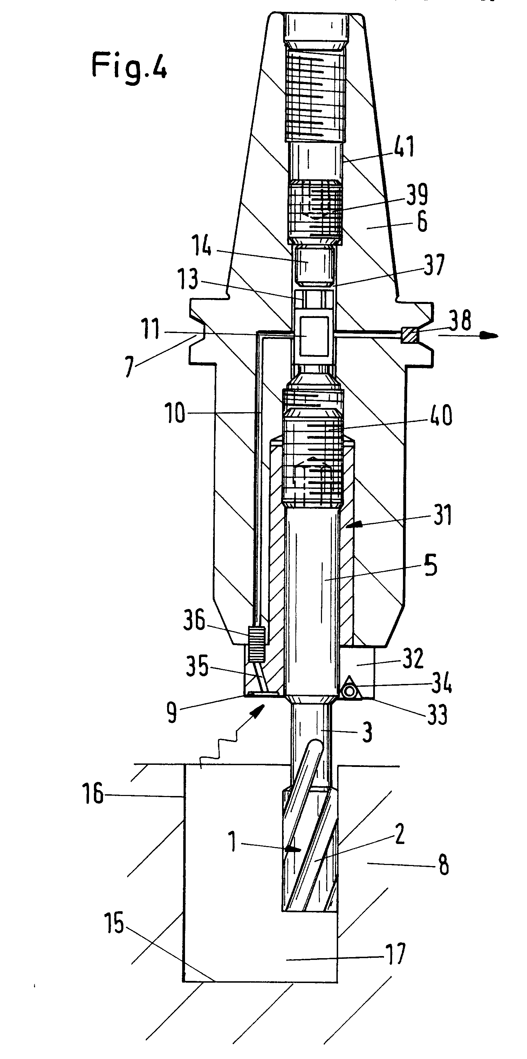

Fig. 4 zeigt ein Werkzeug 1 mit einem Fräserteil 2, einen daran anschließenden, im Durchmesser kleineren Hals 3 und einem Einspannschaft 5. Mit ihm ist das Werkzeug 1 in der Werkzeugaufnahme 6 in bekannter Weise eingespannt. Im Gegensatz zu den vorigen Ausführungsbeispielen sitzen die Energieversorgung 14, die Leitungen 13 und das Verarbeitungsmodul 11 in der Werkzeugaufnahme 6. Der Einspannschaft 5 sitzt in einer Hülse 31, mit dem das Werkzeug 1 in die Werkzeugaufnahme 6 eingesetzt wird. Die Hülse 31 ist an ihrem dem Fräserteil 2 zugewandten Ende mit einem radial nach außen ragenden Flansch 32 versehen, der in der gezeichneten Einbaulage an der Stirnseite der Werkzeugaufnahme 6 anliegt. An der dem Fräserteil zugewandten Stirnseite 33 des Flansches 32 ist mindestens ein Fotosensor 9 befestigt. Wie bei den vorigen Ausführungsbeispielen können auch zwei oder mehr Fotosensoren 9 über den Umfang des Flansches 32 vorgesehen sein. Die Stirnseite 33 des Flansches 32 liegt in einer Radialebene der Hülse 31 mit Abstand vom Fräserteil 2. An der Stirnseite 33 des Flansches 32 ist außerdem mindestens eine Schneidplatte 34, vorzugsweise eine Wendeschneidplatte, befestigt, mit der gesenkt werden kann.

Der Fotosensor 9 ist über eine Leitung 35 mit einer Datenschnittstelle 36 verbunden, die ihrerseits über die Leitung 10 mit dem Verarbeitungsmodul 11 verbunden ist. Die Leitung 35 ist im Flansch 32 der Hülse 31 vorgesehen, während die Leitung 10 durch die Werkzeugaufnahme 6 verläuft. Das Verarbeitungsmodul 11, die Leitungen 13 und die Energieversorgung 14 sind in einem zentralen axialen Hohlraum 37 der Werkzeugaufnahme 6 untergebracht, die wie bei den vorigen Ausführungsbeispielen als Aufnahmedorn ausgebildet ist. Das Verarbeitungsmodul 11 ist mit einem Signalübertrager 38 versehen, der vorteilhaft in der Greifernut 7 der Werkzeugaufnahme 6 angeordnet ist. Über den Signalübertrager 38 werden die vom Fotosensor 9 kommenden und im Verarbeitungsmodul 11 umgesetzten Signale an den (nicht dargestellten) Rechner weitergeleitet.

Im Hohlraum 37 der Werkzeugaufnahme 6 sind das Verarbeitungsmodul 11, die Leitungen 13 und die Energieversorgung 14 zwischen zwei Schraubelementen 39 und 40 angeordnet. Das Schraubelement 40 ragt mit Spiel in die Hülse 31 und ist wie das Schraubelement 39 in eine Gewindebohrung 41 der Werkzeugaufnahme 6 geschraubt. Das Schraubelement 40 dient als einstellbarer Axialanschlag für das Werkzeug 1.

Da der Fotosensor 9 senkrecht zur Achse des Werkzeuges 1 angeordnet ist, kann er während des Fräsens der Sacklochbohrung 17 im Werkstück 8 sowohl die zylindrische Seitenwand 16 als auch den Boden 15 der Sacklochbohrung 17 sowie auch die Bohrungskante 29 während des Fräsvorganges erfassen. Somit ist auch bei diesem Werkzeug eine Online-Überwachung und -Korrektur möglich. Vom Rechner wird das Bearbeitungsergebnis ständig gemessen und ausgewertet. Stimmt das Bearbeitungsergebnis mit dem gewünschten Soll-Ergebnis nicht überein, wird - wie bei den vorigen Ausführungsbeispielen - das Werkzeug 1 on line nachgeführt, so daß bereits während der Bearbeitung die notwendige Korrektur vorgenommen wird.

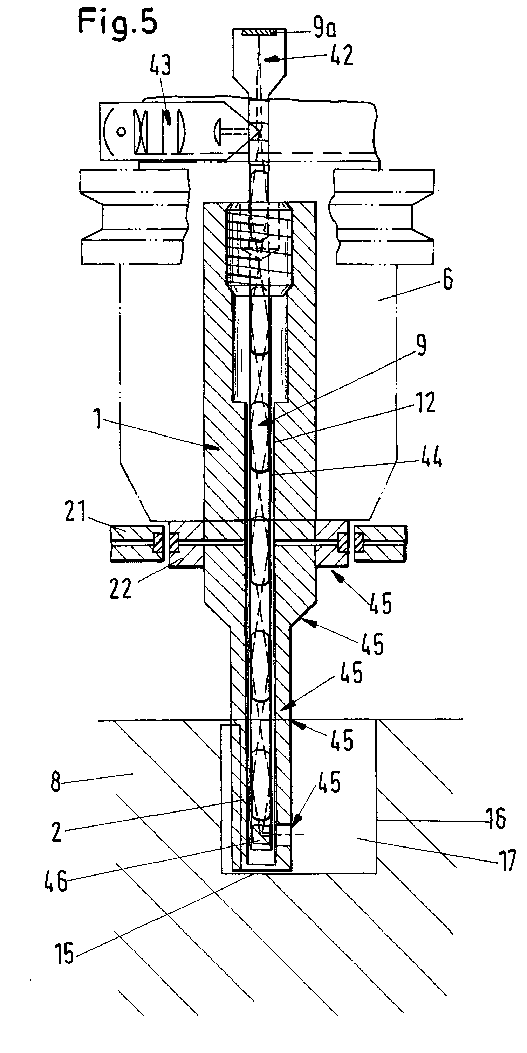

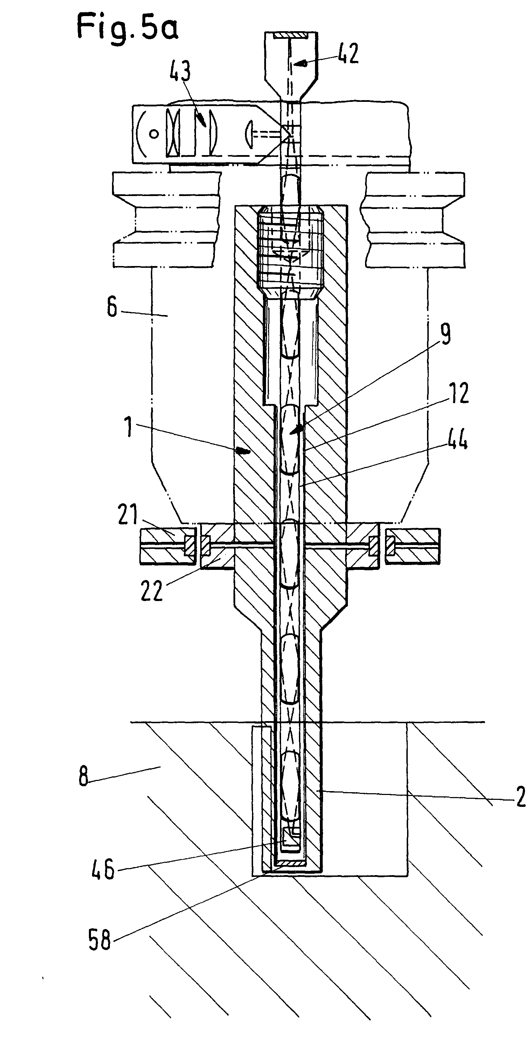

Beim Ausführungsbeispiel nach Fig. 5 wird wiederum ein Werkzeug 1 eingesetzt, das gleich ausgebildet ist wie beim Ausführungsbeispiel nach Fig. 1. Als Fotosensor 9 wird eine Endoskopoptik verwendet, die zentrisch und axial durch die Aufnahme 12 des Werkzeuges 1 geführt ist. Die Endoskopoptik 9 erstreckt sich durch die Werkzeugaufnahme 6 bis zu einem Kamerakopf 42, der feststehend, aber auch mitbewegt sein kann. Innerhalb der Werkzeugaufnahme 6 befindet sich eine Beleuchtungseinheit 43 mit Markenprojektor, mit der in bekannter Weise das für die Endoskopoptik 9 erforderliche Licht erzeugt wird.

Die Endoskopoptik 9 hat ein dünnes Rohr 44, das durch die zentrale Aufnahme des Werkzeuges 1 verläuft und das mit einem Linsensystem oder einer Glasfaseroptik versehen ist. Das Werkzeug 1 weist mindestens eine Ausblicköffnung 45 auf, durch welche die Endoskopoptik den Bearbeitungsbereich des Werkzeuges einsehen kann. Wie in Fig. 5 durch Pfeile angedeutet ist, kann die Ausblicköffnung 45 an unterschiedlichen Stellen des Werkzeuges vorgesehen sein. Die Lage der Ausblicköffnung 45 richtet sich danach, welche Bearbeitung am Werkstück 8 durchgeführt und/oder welcher Werkstückbereich während der Bearbeitung überwacht werden soll. Selbstverständlich ist es auch möglich, zwei oder mehr Ausblicköffnungen 45 an unterschiedlichen Stellen des Werkzeuges 1 vorzusehen. Die Endoskopoptik 9 wird so angeordnet, daß die Beobachtung des Bearbeitungsergebnisses durch das jeweilige Ausblickfenster 45 möglich ist. Hat das Werkzeug 1 zwei oder mehr Ausblicköffnungen 45 an unterschiedlichen Stellen, ist es vorteilhaft, wenn das Rohr 44 der Endoskopoptik 9 verschiebbar in der Aufnahme 12 des Werkzeuges 1 untergebracht ist.

Die Beleuchtungseinheit 43 kann auch außerhalb der Aufnahme 6, beispielsweise im freien Arbeitsraum, angeordnet sein. Wesentlich ist, daß das am freien Ende des Rohres 44 vorgesehene Beobachtungsteil 46 in Höhe der jeweiligen Ausblicköffnung 45 liegt.

Wie beim Ausführungsbeispiel nach Fig. 1 erfolgt die elektronische Signalübertragung über die beiden Übertragungsringe 21, 22.

Im dargestellten Ausführungsbeispiel nach Fig. 5 ist das Beobachtungsteil 46 nahe dem freien Ende des Fräserteiles 2 des Werkzeuges 1 vorgesehen. Durch das entsprechende Ausblickfenster 45 kann somit der untere Bereich der Sacklochbohrung 17 während der Bearbeitung beobachtet und erfaßt werden. Die Achse der unteren Ausblicköffnung 45 ist radial zur Achse des Werkzeuges 1 vorgesehen, so daß die Seitenwand 16 der Sacklochbohrung 17 erfaßt wird. Die Achse der Ausblicköffnung 45 kann selbstverständlich auch schräg nach unten gerichtet sein, so daß gleichzeitig auch der Boden 15 der Sacklochbohrung während der Bearbeitung erfaßt werden kann.

Die vom Beobachtungsteil 46 erfaßten Bereiche des Werkstückes 8 werden in bekannter Weise zum Kamerakopf 42 in Form von Lichtsignalen übertragen. Der Kamerakopf 42 kann in bei Endoskopoptiken bekannter Weise ausgebildet sein oder beispielsweise ein Fotosensor-Array 9a entsprechend den vorigen Ausführungsbeispielen enthalten. Vom Kamerakopf 42 aus werden die Signale entsprechend den vorigen Ausführungsbeispielen ausgewertet.

Je nach Lage der Ausblicköffnung 45 im Fräserteil 2 lassen sich auch andere Arbeitsbereiche des Werkzeuges und damit andere Bearbeitungsstellen am Werkstück 8 beobachten.

Grundsätzlich ist es auch möglich, beispielsweise durch zwei, an unterschiedlichen Stellen des Werkzeuges 1 vorgesehene Ausblicköffnungen gleichzeitig unterschiedliche Bearbeitungsbereiche am Werkstück 8 mit der Endoskopoptik 9 zu beobachten. Um die entsprechenden Informationen optisch zuordnen zu können, kann beispielsweise das Licht polarisiert werden. In diesem Falle können durch unterschiedliche Polarisation die Signale der jeweiligen Ausblicköffnung 45 zugeordnet werden. Eine weitere Möglichkeit der Zuordnung wäre die Verwendung von Farblicht mit einem zugehörigen selektiven Strahlteiler. Durch die Farbunterscheidung können die übersandten Signale ebenfalls der jeweiligen Ausblicköffnung 45 zugeordnet werden.

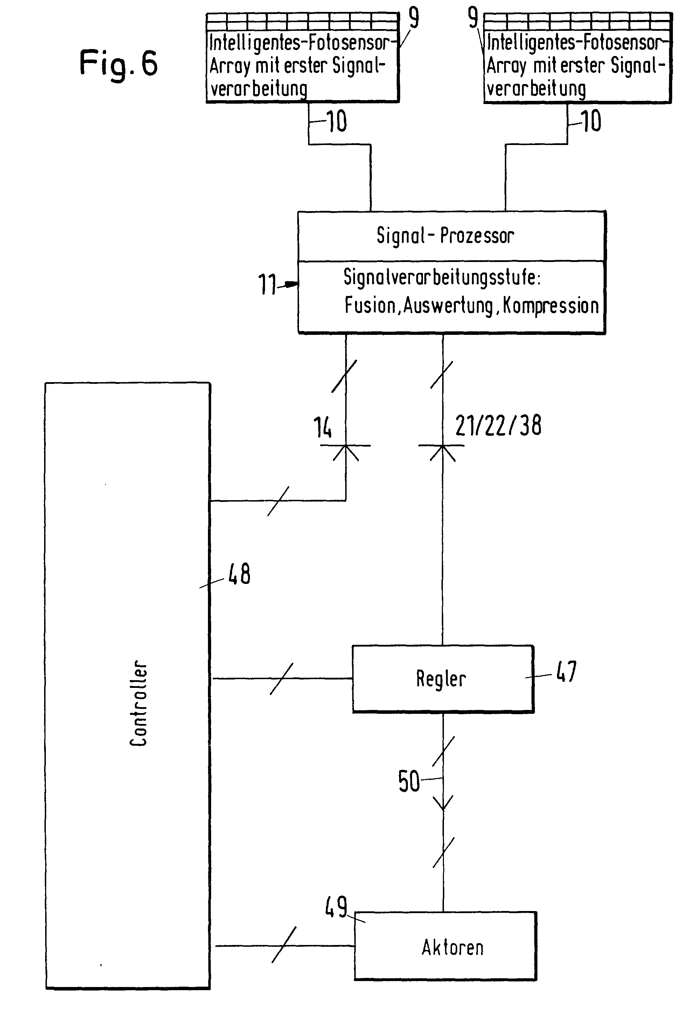

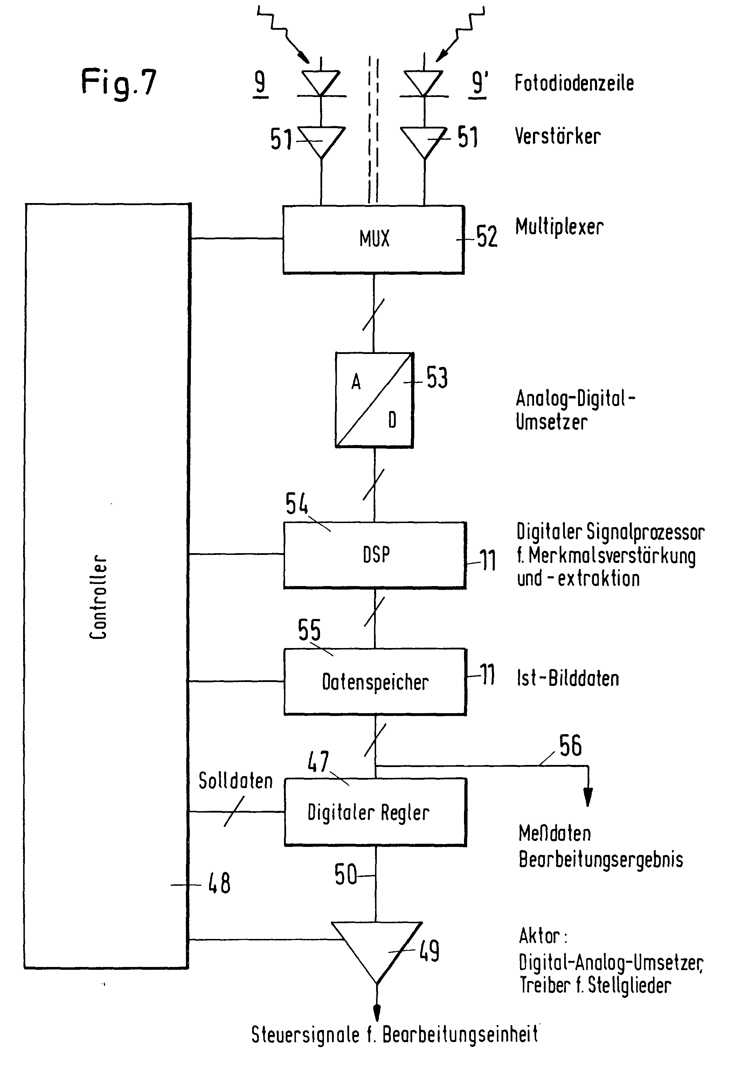

Die Auslenkung des Werkzeugs während der Bearbeitung kann nach dem in Fig. 5a gezeigten Prinzip erfolgen. Dort ist die Optik der endoskopartigen Beobachtungseinrichtung 9 starr mit der Werkzeugaufnahme 6 verbunden und wird durch das Werkzeug 1 mit ausreichendem Abstand berührungsfrei hindurchgeführt. Die Blickrichtung der Optik zeigt auf eine Strichplatte 58, die in einer Bohrung des Werkzeugs 1 angebracht ist. Sobald mit dem Werkzeug 1 zerspant wird, treten Schnittkräfte auf, die hauptsächlich den Schneidenbereich des Werkzeugs 1 verformen. Dadurch kommt es zu einer Relativbewegung zwischen Werkzeug 1 und Endoskopoptik 9, die über die Beobachtung der Bewegung der Strichplatte 58 sichtbar gemacht werden kann. Die Erfassung der Bildsignale geschieht wiederum über ein Fotoarray 9a am Ende der Endoskopoptik 9. Die weitere Auswertung der Signale erfolgt in der Weise, wie es aufgrund von Fig. 5 beschrieben und anhand der Fig. 6 und 7 noch näher erläutert werden wird. Um Schwingungen der Endoskopoptik 9 während der Bearbeitung zu vermeiden, ist diese vorteilhaft so kurz wie möglich auszuführen. Gegebenenfalls kann die Endoskopoptik 9 im Schaftteil 5 des Werkzeugs 1 zusätzlich abgestützt werden, weil dort kaum Verformungen auftreten. Im übrigen ist diese Ausführungsform gleich ausgebildet wie das Werkzeug gemäß Fig. 5.

Die anhand der Fig. 1 bis 5, 5a beschriebenen Werkzeuge sind nur beispielhaft Fräswerkzeuge. Es können selbstverständlich auch andere Werkzeuge, z.B. Ausdrehwerkzeuge, Drehmeißel, Schleifwerkzeuge und dergleichen, als sehende Werkzeuge ausgebildet werden, bei denen eine Online-Vermessung sowie eine Online-Korrektur durchgeführt werden kann.

Anhand von Fig. 6 soll die Regelung des Werkzeuges bzw. der Werkzeugeinheit näher erläutert werden. Beispielhaft wird davon ausgegangen, daß das Werkzeug 1 zwei Fotosensoren 9 hat, die jeweils als Fotosensor-Arrays ausgebildet sind. Mit ihnen findet eine erste Signalverarbeitung statt. Die Signale werden über die Leitungen 10 dem Verarbeitungsmodul 11 zugeführt. Es ist ein Signalprozessor, der eine Signalverarbeitungsstufe enthält, in welcher die Signale zusammengefaßt, ausgewertet und komprimiert werden. Über die Kontakte 21, 22 (Übertragungsringe) bzw. 38 werden die im Verarbeitungsmodul 11 verarbeiteten Daten einem Regler 47 zugeführt, der Bestandteil des Rechners ist. Der Regler 47 ist an einen Mikroprozessor 48 des Rechners angeschlossen. Die Energieversorgung 14, die in Fig. 6 schematisch gezeichnet ist, ist ebenfalls an den Mikroprozessor 48 angeschlossen.

Dem Regler 47 werden nicht nur die von den Fotosensoren 9 gemessenen Signale als Ist-Werte zugeführt, sondern vom Mikroprozessor 48 auch die Sollwert-Signale. Im Regler 47 findet der Soll-Ist-Wert-Vergleich statt. Treten Abweichungen auf, werden Aktoren 49 der Bearbeitungseinheit bzw. -maschine mit entsprechenden Regelsignalen 50 beaufschlagt. Mit den Aktoren können Stellmotoren, Vorschubantriebe und dergleichen an Bearbeitungsmaschinen geregelt werden, mit denen die Werkzeuge entsprechend korrigiert werden. Die Steuerung der Aktoren erfolgt vorteilhaft ebenfalls durch den Mikroprozessor 48.

Der Bereich von den Sensoren 9 bis zur Energieversorgung 14 bzw. den Kontakten 21, 22, 38 ist dem Werkzeug zuzurechnen, während der übrige Bereich der dargestellten Regelung der Bearbeitungseinheit zuzurechnen ist. Aufgrund der beschriebenen Echtzeitregelung, die teilweise in das Werkzeug 1 integriert ist, kann während der Bearbeitung das Bearbeitungsergebnis gemessen und ausgewertet und anhand des Auswertungsergebnisses on line korrigiert werden.

Fig. 7 zeigt ein Beispiel für die zugehörige Elektronik. Als Fotosensoren 9, 9' sind Fotodiodenzeilen vorgesehen, die über jeweils einen Verstärker 51 an einen Multiplexer 52 angeschlossen sind. Er ist über einen Analog-Digital-Wandler 53 mit dem Verarbeitungsmodul 11 verbunden. Es hat einen digitalen Signalprozessor 54, an den der Analog-Digital-Wandler 53 angeschlossen ist. Im Signalprozessor 54 werden die Digitalsignale verstärkt und extrahiert. Die so aufbereiteten Signale werden in einem Datenspeicher 55 des Verarbeitungsmoduls 11 abgelegt. Diese Daten bilden die Ist-Daten, welche das jeweilige Arbeitsergebnis am Werkstück kennzeichnen. Der Signalprozessor 54 und der Datenspeicher 55 sind an den Mikroprozessor 48 angeschlossen. Es liefert Soll-Daten an den digitalen Regler 47, in dem diese Soll-Daten mit den Ist-Daten verglichen werden.

Je nach Ergebnis dieses Vergleiches werden Regelsignale 50 den jeweiligen Aktoren 49 zugeführt, der an den Mikroprozessor 48 angeschlossen ist. Die Regelsignale werden über einen (nicht dargestellten) Digital-Analog-Wandler in Steuersignale für einen Stellmotor, einen Vorschubantrieb und dergleichen einer Bearbeitungsmaschine umgesetzt.

Die im Datenspeicher 55 abgelegten Ist-Daten können über eine Leitung 56 abgerufen werden, so daß das jeweilige Bearbeitungsergebnis beispielsweise in Form von Meßdaten ausgedruckt oder in einer Anzeige dargestellt werden kann. Somit ist auch eine Protokollierung der Bearbeitung am jeweiligen Werkstück möglich.

Der Regler 47 generiert in Echtzeit die Steuersignale für die jeweilige Bearbeitungseinheit, um das Werkzeug und/oder das Werkstück entsprechend zu bewegen, um aufgetretene Abweichungen von einem Soll-Ergebnis zu korrigieren. Die erforderlichen elektronischen Teile bestehen aus höchstintegrierten elektronischen Mikrochips, die auch in kleinen Werkzeugen untergebracht werden können.

Die Fotosensoren sind vorzugsweise integrierte, miniaturisierte Fotosensor-Arrays, die als Zeilen- oder Flächenarrays ausgebildet sind. Die Sensorsignalvielfalt wird verdichtet und in robuste Digitalsignale mittels des Analog-Digital-Wandlers 53 gewandelt. Um die Datenrate klein und damit die Auswertezeiten gering zu halten, werden die Daten im Verarbeitungsmodul 11 komprimiert. Der Regler 47 bewertet das Bearbeitungsergebnis on line und erzeugt ebenfalls on line die entsprechenden Regelsignale 50. Die abbildenden Sensoren 9 haben eine vorgeschaltete Linse bzw. ein vorgeschaltetes Endoskop-Teil.

Da die Fotosensoren die Bearbeitung des Werkstückes 8 durch das Werkzeug 1 ständig überwachen, findet ein ständiger Vergleich zwischen den Ist-Daten und den Soll-Daten statt. Im Datenspeicher 55 verbleiben die Ist-Daten vorteilhaft nur so lange, wie sie zum Soll-Ist-Wert-Vergleich durch den Regler 47 benötigt werden. Dann kann der Speicherbedarf klein gehalten werden. Bei entsprechender Größe des Datenspeichers 55 ist es selbstverständlich möglich, sämtliche während eines Bearbeitungsvorganges anfallende Daten zu speichern. Hierbei wirkt sich vorteilhaft aus, daß die Ist-Daten komprimiert werden. Insbesondere stehen dann die Meßdaten auch nach Beendigung des Bearbeitungsprozesses zur Verfügung, so daß sie über die Leitung 56 anschließend aus dem Datenspeicher 55 gelesen und beispielsweise ausgedruckt werden können.

## Patentansprüche

1. Bearbeitungseinrichtung mit einer Werkzeugaufnahme (6) und einem Werkzeug (1) zur Bearbeitung von Werkstücken (8), das einen Arbeitsteil (2) und einen Einspannschaft (5) aufweist, der in der Werkzeugaufnahme (6) aufnehmbar ist, und mit mindestens einem gegen den Bearbeitungsbereich am Werkstück (8) gerichteten Sensor (9, 9'), der zumindest einen Teil des Bearbeitungsbereiches des Werkzeuges (1) erfaßt und entsprechende Signale an wenigstens eine Auswerteeinheit überträgt,
**dadurch gekennzeichnet, daß** der Sensor (9, 9') an der Außenseite des Werkzeuges (1) vorgesehen ist (Fig. 1 bis 4).

2. Bearbeitungseinrichtung nach Anspruch 1,
**dadurch gekennzeichnet, daß** der Sensor (9, 9') am Arbeitsteil (2) des Werkzeuges (1) vorgesehen ist.

3. Bearbeitungseinrichtung nach Anspruch 1,
**dadurch gekennzeichnet, daß** der Sensor (9, 9') an einem Hals (3) des Werkzeuges (1) vorgesehen ist.

4. Bearbeitungseinrichtung mit einer Werkzeugaufnahme (6) und einem Werkzeug (1) zur Bearbeitung von Werkstücken (8), das einen Arbeitsteil (2) und einen Einspannschaft (5) aufweist, der in der Werkzeugaufnahme (6) aufnehmbar ist, und mit mindestens einem gegen den Bearbeitungsbereich am Werkstück (8) gerichteten Sensor (9, 9'), der zumindest einen Teil des Bearbeitungsbereiches des Werkzeuges (1) erfaßt und entsprechende Signale an wenigstens eine Auswerteeinheit überträgt,
**dadurch gekennzeichnet, daß** der Sensor (9) im Werkzeug (1) vorgesehen ist.

5. Bearbeitungseinrichtung nach einem der Ansprüche 1 bis 3,
**dadurch gekennzeichnet, daß** der Sensor (9, 9') eine Fotodiodenzelle oder ein Fotodioden-Array ist.

6. Bearbeitungseinrichtung nach Anspruch 5
**dadurch gekennzeichnet, daß** der Sensor (9) durch eine Endoskopoptik gebildet ist, die vorzugsweise durch das Werkzeug (1) verläuft und vorzugsweise ein Rohr (44) aufweist, das am freien Ende mit einem Beobachtungsteil (46) versehen ist.

7. Bearbeitungseinrichtung nach Anspruch 6,
**dadurch gekennzeichnet, daß** das Werkzeug (1) mindestens eine Ausblicköffnung (45) für das Beobachtungsteil (46) aufweist.

8. Bearbeitungseinrichtung nach Anspruch 6 oder 7,
**dadurch gekennzeichnet, daß** in Blickrichtung des Beobachtungsteiles (46) mindestens eine fest mit dem Werkzeug (1) verbundene Strichplatte (58) vorgesehen ist, die vorzugsweise in einer Bohrung im Arbeitsteil (2) des Werkzeuges (1) untergebracht ist.

9. Bearbeitungseinrichtung nach einem der Ansprüche 1 bis 8,
**dadurch gekennzeichnet, daß** der Sensor (9, 9') an ein Datenumwandlungsmodul (11) angeschlossen ist, das vorteilhaft im Werkzeug (1), vorzugsweise in dessen Einspannschaft (5), untergebracht ist.

10. Bearbeitungseinrichtung nach Anspruch 9,
**dadurch gekennzeichnet, daß** das Datenumwandlungsmodul (11) in der Werkzeugaufnahme (6, 31) untergebracht ist und vorzugsweise einen Signalprozessor (54) aufweist, dem vorzugsweise ein Datenspeicher (55) nachgeschaltet ist.

11. Bearbeitungseinrichtung nach Anspruch 9 oder 10,
**dadurch gekennzeichnet, daß** dem Datenumwandlungsmodul (11) ein Analog-Digital-Wandler (53) vorgeschaltet ist.

12. Bearbeitungseinrichtung nach einem der Ansprüche 4 bis 11,
**dadurch gekennzeichnet, daß** die optischen Signale an den Sensor endoskopisch übertragen werden.

13. Bearbeitungseinrichtung nach einem der Ansprüche 4 bis 12,
**dadurch gekennzeichnet, daß** eine Beleuchtung und Markenprojektion in der Werkzeugaufnahme eingebaut ist.

14. Bearbeitungseinrichtung nach einem der Ansprüche 4 bis 13,
**dadurch gekennzeichnet, daß** die Endoskopoptik an verschiedenen Ausblicköffnungen (45) am Werkzeug angeschlossen ist.

15. Bearbeitungseinrichtung nach einem der Ansprüche 11 bis 14,
**dadurch gekennzeichnet, daß** der Analog-Digital-Wandler (53) zwischen einem Multiplexer (52), an welchem der Sensor (9, 9') angeschlossen ist, und dem Datenumwandlungsmodul (11) liegt.

16. Bearbeitungseinrichtung nach einem der Ansprüche 1 bis 15,
**dadurch gekennzeichnet, daß** die Auswerteeinheit ein Rechner ist, an den die Signale vorzugsweise kontaktlos übertragbar sind.

17. Bearbeitungseinrichtung nach einem der Ansprüche 1 bis 16,
**dadurch gekennzeichnet, daß** die Signale zur Regelung des Werkzeuges (1) herangezogen werden und vorzugsweise einem Regler (47) zuführbar sind, der sie mit Soll-Signalen vergleicht und bei Abweichungen ein Regelsignal (50) abgibt.

18. Bearbeitungseinrichtung nach Anspruch 17,
**dadurch gekennzeichnet, daß** das Regelsignal (50) einem Aktor (49) zuführbar ist, mit dem ein Stellmotor, ein Vorschubantrieb und dergleichen einer Bearbeitungsmaschine antreibbar ist.

19. Bearbeitungseinrichtung nach einem der Ansprüche 1 bis 18,
**dadurch gekennzeichnet, daß** die Auswerteeinheit die vom Sensor (9, 9') kommenden Signale on-line auswertet und on-line die Regelsignale (50) erzeugt.

20. Bearbeitungseinrichtung nach einem der Ansprüche 1 bis 19,
**dadurch gekennzeichnet, daß** zur Energieversorgung ein Akku (14), eine Batterie oder eine externe Stromquelle vorgesehen ist.

21. Bearbeitungseinrichtung nach einem der Ansprüche 1 bis 20,
**dadurch gekennzeichnet, daß** das Werkzeug (1) mit Dehnmeßstreifen (57) versehen ist, die vorzugsweise am Arbeitsteil (2) des Werkzeuges (1) vorgesehen sind.

## Claims

1. A machining device with a tool holder (6) and a tool (1) for machining workpieces (8), the tool (1) comprising a working part (2) and a clamping shank (5) which can be received in the tool holder (6), and with at least one sensor (9. 9') directed towards the working area on the workpiece (8) and covering at least part of the working area of the tool (1) and transmitting corresponding signals to at least one evaluation unit, **characterized in that** the sensor (9, 9') is provided on the outside of the tool (1) (Figs. 1 to 4).

2. A machining device according to Claim 1, **characterized in that** the sensor (9, 9') is provided on the working part (2) of the tool (1).

3. A machining device according to Claim 1, **characterized in that** the sensor (9, 9') is provided on a neck (3) of the tool (1).

4. A machining device with a tool holder (6) and a tool (1) for machining workpieces (8), the tool (1) comprising a working part (2) and a clamping shank (5) which can be received in the tool holder (6), and with at least one sensor (9, 9') directed towards the working area on the workpiece (8) and covering at least part of the working area of the tool (1) and transmitting corresponding signals to at least one evaluation unit, **characterized in that** the sensor (9) is provided in the tool (1).

5. A machining device according to one of Claims 1 to 3, **characterized in that** the sensor (9, 9') is a photodiode cell or a photodiode array.

6. A machining device according to Claim 5, **characterized in that** the sensor (9) is formed by an endoscope optic which preferably extends through the tool (1) and preferably comprises a tube (44) provided with an observation part (46) at the free end.

7. A machining device according to Claim 6, **characterized in that** the tool (1) has at least one viewing opening (45) for the observation part (46).

8. A machining device according to Claim 6 or 7, **characterized in that** at least one reticule (58) rigidly connected to the tool (1) and preferably arranged in a bore in the working part (2) of the tool (1) is provided in the viewing direction of the observation part (46).

9. A machining device according to one of Claims 1 to 8, **characterized in that** the sensor (9, 9') is attached to a data-conversion module (11) advantageously arranged in the tool (1), and preferably in the clamping shank (5) of the said tool (1).

10. A machining device according to Claim 9, **characterized in that** the data-conversion module (11) is arranged in the tool holder (6, 31) and preferably comprises a signal processor (54), downstream of which a data memory (55) is preferably connected.

11. A machining device according to Claim 9 or 10, **characterized in that** an analogue-digital converter (53) is connected upstream of the data-conversion module (11).

12. A machining device according to one of Claims 4 to 11, **characterized in that** the optical signals are transmitted to the sensor endoscopically.

13. A machining device according to one of Claims 4 to 12, **characterized in that** an illumination means and mark projection is incorporated in the tool holder.

14. A machining device according to one of Claims 4 to 13, **characterized in that** the endoscope optic is attached to the tool at various viewing openings (45).

15. A machining device according to one of Claims 11 to 14, **characterized in that** the analogue-digital converter (53) is arranged between a multiplexer (52), to which the sensor (9, 9') is attached, and the data-conversion module (11).

16. A machining device according to one of Claims 1 to 15, **characterized in that** the evaluation unit is a computer, to which the signals can preferably be transmitted without contact.

17. A machining device according to one of Claims 1 to 16, **characterized in that** the signals are used for regulating the tool (1) and can preferably be supplied to a regulator (47) which compares them with nominal signals and emits a control signal (50) in the event of deviations.

18. A machining device according to Claim 17, **characterized in that** the control signal (50) can be supplied to an actuator (49) by which an actuating motor, a feed drive and the like of a treatment machine can be driven.

19. A machining device according to one of Claims 1 to 18, **characterized in that** the evaluation unit evaluates on-line the signals arriving from the sensor (9, 9') and produces the control signals (50) on-line.

20. A machining device according to one of Claims 1 to 19, **characterized in that** an accumulator (14), a battery or an external current source is provided for the energy supply.

21. A machining device according to one of Claims 1 to 20, **characterized in that** the tool (1) is provided with wire strain gauges (57) which are preferably provided on the working part (2) of the tool (1).

## Revendications

1. Dispositif d'usinage comportant un logement d'outil (6) et un outil (1) pour l'usinage de pièces à usiner (8), qui comporte une partie de travail (2) et une tige de serrage (5), qui peut être logée dans le logement d'outil (6), et au moins un photodétecteur (9, 9'), qui est orienté vers la zone d'usinage sur la pièce à usiner (8) et qui détecte au moins une partie de la zone d'usinage de la pièce à usiner (1) et transmet des signaux correspondants à au moins une unité d'évaluation, **caractérisé en ce que** le photodétecteur (9, 9') est prévu sur le côté extérieur de l'outil (1) (figures 1 à 4).

2. Dispositif d'usinage selon la revendication 1, **caractérisé en ce que** le photodétecteur (9, 9') est prévu sur la partie de travail (2) de l'outil (1).

3. Dispositif d'usinage selon la revendication 1, **caractérisé en ce que** le photodétecteur (9, 9') est prévu sur un col (3) de l'outil (1).

4. Dispositif d'usinage comportant un logement d'outil (6) et un outil (1) pour l'usinage de pièces à usiner (8), qui comporte une partie de travail (2) et une tige de serrage (5), qui peut être logée dans le logement d'outil (6), et au moins un photodétecteur (9, 9'), qui est orienté vers la zone d'usinage sur la pièce à usiner (8) et qui détecte au moins une partie de la zone d'usinage de la pièce à usiner (1) et transmet des signaux correspondants à au moins une unité d'évaluation, **caractérisé en ce que** le détecteur (9) est prévu dans l'outil (1).

5. Dispositif d'usinage selon l'une des revendications 1 à 3, **caractérisé en ce que** le détecteur (9, 9') est une cellule à photodiodes ou un réseau de photodiodes.

6. Dispositif d'usinage selon la revendication 5, **caractérisé en ce que** le photodétecteur (6) est formé par un système optique d'endoscope, qui s'étend de préférence à travers l'outil (1) et possède de préférence un tube (44), qui comporte, sur son extrémité libre, une partie d'observation (46).

7. Dispositif d'usinage selon la revendication 6, **caractérisé en ce que** l'outil (1) comporte au moins une ouverture d'observation (45) pour la partie d'observation (46).

8. Dispositif d'usinage selon la revendication 6 ou 7, **caractérisé en ce que** dans la direction d'observation de la partie d'observation (46) est prévue au moins une plaque (58) pourvue de traits, qui est reliée de façon fixe à l'outil (1) et est logée de préférence dans un perçage de la partie de travail (2) de l'outil (1).

9. Dispositif d'usinage selon les revendications 1 à 8, **caractérisé en ce que** le photodétecteur (9, 9') est raccordé à un module (11) de conversion de données, qui est logé avantageusement dans l'outil (1), de préférence dans la tige de serrage (5) de l'outil.

10. Dispositif d'usinage selon la revendication 9, **caractérisé en ce que** le module (11) de conversion de données est logé dans le logement d'outil (6, 31) et possède de préférence un processeur de signaux (54), en aval duquel est branchée par exemple une mémoire de données (55).

11. Dispositif d'usinage selon la revendication 9 ou 10, **caractérisé en ce qu'**un convertisseur analogique/numérique (53) est branché en amont du module de conversion de données (11).

12. Dispositif d'usinage selon l'une des revendications 4 à 11, **caractérisé en ce que** les signaux optiques sont transmis au détecteur par voie endoscopique.

13. Dispositif d'usinage selon l'une des revendications 4 à 12, **caractérisé en ce qu'**un dispositif d'éclairement et un dispositif de projection de marques sont montés dans le logement d'outil.

14. Dispositif d'usinage selon les revendications 4 à 13, **caractérisé en ce que** le système optique d'endoscope est raccordé à différentes ouvertures d'observation (45) sur l'outil.

15. Dispositif d'usinage selon l'une des revendications 11 à 14, **caractérisé en ce que** le convertisseur analogique/numérique est monté entre un multiplexeur (52), auquel est raccordé le détecteur (9, 9'), et le module de conversion de données (11).

16. Dispositif d'usinage selon l'une des revendications 1 à 15, **caractérisé en ce que** l'unité d'évaluation est un calculateur, auquel les signaux peuvent être transmis de préférence sans contact.

17. Dispositif d'usinage selon l'une des revendications 1 à 16, **caractérisé en ce que** les signaux sont utilisés pour la régulation de l'outil (1) et peuvent être envoyés de préférence à un régulateur (47), qui les compare à des signaux de consigne et, en cas d'écarts, délivre un signal de régulation (50).

18. Dispositif d'usinage selon la revendication 17, **caractérisé en ce que** le signal de régulation (50) peut être envoyé à un actionneur (49), par lequel un servomoteur, un dispositif d'entraînement d'avance et analogue d'une machine à usiner peuvent être entraînés.

19. Dispositif d'usinage selon l'une des revendications 1 à 18, **caractérisé en ce que** l'unité d'évaluation évalue en ligne, les signaux arrivant du photodétecteur (9, 9') et produit en ligne les signaux de régulation (50).

20. Dispositif d'usinage selon l'une des revendications 1 à 19, **caractérisé en ce que** pour l'alimentation en énergie il est prévu un accumulateur (14), une batterie ou une source de courant externe.

21. Dispositif d'usinage selon l'une des revendications 1 à 20, **caractérisé en ce que** l'outil (1) comporte des jauges extensométriques (57), qui sont prévues de préférence sur la partie de travail (2) de l'outil (1).
